# EUROPÄISCHE PATENTSCHRIFT

(11) **EP 0 882 614 B1**
(45) Veröffentlichungstag und Bekanntmachung des Hinweises auf die Patenterteilung: **08.08.2001**
(21) Anmeldenummer: 98109388.3
(22) Anmeldetag: 23.05.1998
(51) Int. Cl.: B60J 7/12, B60J 5/06

(54) **Verschiebbare Seitenplane für Nutzfahrzeuge**
Movable side curtain for utility vehicles
Bâche latérale amovible pour véhicules utilitaires

(30) Priorität: 02.06.1997 DE 19725856
(43) Veröffentlichungstag der Anmeldung: 09.12.1998
(73) Patentinhaber: Edscha LKW-Schiebeverdecke GmbH, 42855 Remscheid (DE)
(72) Erfinder: Remmel, Roger, 42897 Remscheid (DE); Drasch, Josef, 94577 Winzer (DE)
(74) Vertreter: Sparing, Rolf Klaus

(56) Entgegenhaltungen:
- EP-A- 0 415 014
- DE-A- 3 345 970
- FR-A- 2 352 689
- GB-A- 2 291 095

## Beschreibung

Die Erfindung bezieht sich auf einen Fahrzeugaufbau mit flexiblen, insbesondere durch eine Plane gebildeten und vermittels Rollen an oberen Längsgurten des Fahrzeugaufbaues in Fahrzeuglängsrichtung verschieblich aufgehängten Seitenwandungen, wobei die oberen Längsgurte des Fahrzeugaufbaues mit einer in Längsrichtung durchgehenden wenigstens schlitzförmig geöffneten Rollenlaufbahn versehen und die insbesondere flexiblen Seitenwandungen an, eine Profilwandung der oberen Längsgurte durchgreifenden an die Lagerachsen der Rollen angeschlossenen Tragteilen aufgehängt sind.

Bei einer bekannten Bauart eines Fahrzeugaufbaues der vorgenannten Art (FR-PS 23 52 689) sind durch Planen oder dergl. gebildete flexible Seitenwandungen des Fahrzeugaufbaues vermittels einer Anzahl von Rollenpaaren in Fahrzeuglängsrichtung verschiebbar an den oberen Längsgurten des Fahrzeugaufbaues aufgehängt, wobei den Rollen eine an den oberen Längsgurt angeschlossene, für den Durchtritt von Tragteilen zum Anschluß der Seitenwandplanen schlitzförmig geöffnete Rollenlaufbahn zugeordnet ist und wobei die Tragteile jeweils an die Rollenlagerachsen angeschlossen sind. Die oberen Längsgurte des Fahrzeugaufbaues sind hierbei aus mehreren Teilprofilen zusammengesetzt.

Bei einer weiteren bekannten Bauart eines Fahrzeugaufbaues (EP-OS 0 415 014) bestehen die oberen Längsgurte des Fahrzeugaufbaues aus einem Strangpressprofil und weisen die oberen Längsgurte jeweils eine vergleichbar gestaltete, schlitzförmig geöffnete Rollenlaufbahn für eine Seitenwandplane tragende Rollen auf, wobei die Rollenlaufbahn in einer Profilkammer des Strangpressprofiles untergebracht ist und wobei ferner die Laufflächen der Rollen und die Rollenlaufbahn bogenförmig gekrümmt sind.

Beiden bekannten Bauarten von Fahrzeugaufbauten ist gemeinsam, daß keine Möglichkeit besteht, die die Seitenplanen an den oberen Längsgurten des Fahrzeugaufbaues abstützenden Rollen zumindest bei geschlossenen Fahrzeugseitenwänden zu arretieren, um die Seitenwandplanen in ihrer Schließstellung auch gegenüber den oberen Längsgurten festlegen zu können. Die Festlegung der Seitenwandplanen erfolgt vielmehr bei allen bekannten Bauarten entsprechend ausgerüsteter Fahrzeugaufbauten allein durch eine Verspannung bzw. Befestigung des unteren Endes bzw. Bereiches der Seitenwandplanen gegenüber dem Fahrzeugaufbau oder der Ladepritsche des Fahrzeuges. Ein Fahrzeugaufbau gemäß dem Oberbegriff des Anspruchs A ist z.B. durch GB-A-2291095 bekannt. Der Erfindung liegt ausgehend von dem vorstehend aufgezeigten Stand der Technik, die Aufgabe zugrunde einen gattungsgemäßen Fahrzeugaufbau dahingehend zu verbessern, daß die Seitenwandplanen in jeder beliebigen Schließ-bzw. Öffnungsstellung auf einfache Weise unverschieblich gegenüber den oberen Längsgurten des Fahrzeugaufbaues festlegbar sind.

Diese Aufgabe wird erfindungsgemäß durch die Kombination der Merkmale des Anspruchs 1 gelöst. Die Begrenzung der maximalen vertikalen Profilhöhe der die Rollenlaufbahn aufweisenden Profilkammer ermöglicht es durch Ausrichten der Seitenwand bzw. Seitenwandplane in die Vertikale die Rollen gegenüber der Profilkammer festzulegen, derart, daß die Rollfähigkeit der Rollen aufgehoben und die Rollen damit in ihrer jeweiligen Position festgestellt werden können. Die Seitenwandungen bzw. Seitenwandplanen des Fahrzeugaufbaues sind lediglich bei um wenigstens einige Grad gegen die Vertikale angestellter Ausrichtung in Fahrzeuglängsrichtung verschieblich. Die erfindungsgemäße Aufhängung der Seitenwand bzw. Seitenwandplane zeichnet sich in besonders vorteilhafterweise dadurch aus, daß sie gegenüber herkömmlichen Aufhängungen für Seitenwände bzw. Seitenwandplanen von Nutzfahrzeugen praktisch ohne jeden Mehraufwand realisierbar ist. Anstelle einer Unterbringung der Rollenlaufbahn in einer Profilkammer, insbesondere eines Strangpressprofiles, kann eine entsprechende Rollenlaufbahn selbstverständlich auch in jedem anderen bekannten Bauteil mit begrenzter lichter Profilhöhe eines oberen Längsgurtes für Fahrzeugaufbauten angeordnet werden.

In einer bevorzugten praktischen Verwirklichung ist weiterhin vorgesehen, daß die Rollen kreisbogenförmig gekrümmte Laufflächen und die die Rollen in vertikaler Richtung abstützende Rollenlaufbahn in der Profilkammer der oberen Längsgurte des Fahrzeugaufbaues eine komplementär kreisbogenförmig gekrümmte Profilquerschnittsform aufweist.

Die die Rollenlaufbahn beinhaltende Profilkammer der oberen Längsgurte weist zweckmäßigerweise im wesentlichen eine einem auf der Spitze stehenden ungleichschenkeligen Dreieck entsprechende Querschnittsform auf, wobei die Ecken der Dreieckform der Querschnittskontur der Rollenlauffläche entsprechend radienförmig gestaltet sind.
Zur Begrenzung der erforderlichen Baubreite der die Rollenlaufbahn beinhaltenden Profilkammer ist gemäß einer zweckmäßigen Weiterbildung ferner vorgesehen, daß die Profiltiefe der Profilkammer in deren oberen Bereich auf ein etwa der Hälfte des Rollendurchmessers entsprechendes Maß begrenzt ist, wobei der obere Wandungsbereich der Profilkammer zumindest im wesentlichen horizontal ausgerichtet ist und sich an einen im wesentlichen vertikal ausgerichteten hinteren Wandungsbereich ein unter einem steilen Winkel zur Rollenlaufbahn hin geneigt abfallender Wandungsbereich anschließt. Eine solche Verringerung der Profiltiefe der Profilkammer in deren oberen Bereich kann ohne Beeinträchtigung der Funktionstüchtigkeit der Seitenwandaufhängung hingenommen werden, da die für das Verschieben der Seitenwand bzw. Seitenwandplane erforderliche Kippbewegung der Rollen lediglich wenige Grad Kippwinkel erfordert.

Die Öffnung der Profilkammer in die Längsgurtaußenseite kann verhältnismäßig groß bemessen werden, insbesondere dahingehend, daß die Öffnung der Profilkammer zur Längsgurtaußenseite hin durch je einen oberen und einen unteren, in der Ebene der vertikalen Profillängswandung des Längsgurtes angeordneten Wandungssteg begrenzt ist.

Eine besonders bevorzugte Gestaltung der Anbindung der Seitenwandung bzw. Seitenwandplane an die in der Profilkammer aufgenommenen Rollen ergibt sich daraus, daß die Rollen fliegend an L-förmigen, mit ihrem kürzeren Profilschenkel in die Profilkammer der oberen Längsgurte eingreifenden Tragteilen gelagert und die verschieblichen Seitenwandungen mit dem längeren Profilschenkel der Tragteile verbunden sind, und wobei der in die Profilkammer der Längsgurte eingreifende Profilschenkel der Tragteile eine Lagerung für die Rollen beinhaltet.

In einer vorteilhaften Ausführungsform kann weiterhin vorgesehen sein, daß zumindest die Laufflächen der Rollen aus einem Kunststoffmaterial bestehen.

Die Erfindung ist in der nachfolgenden Beispielsbeschreibung anhand eines in der Zeichnung dargestellten Ausführungsbeispieles im Einzelnen beschrieben.

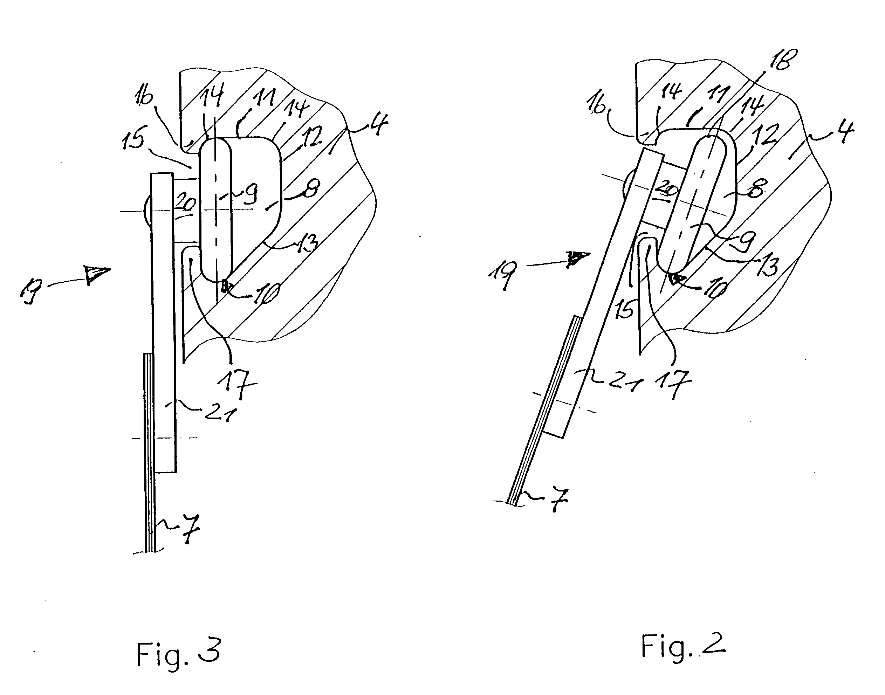

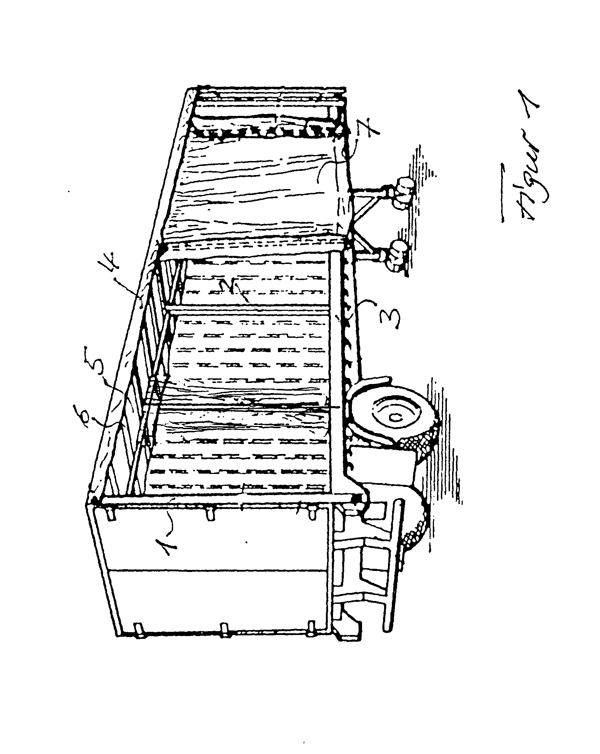

In der Zeichnung zeigt die
Figur 1 eine schematische Seitenansicht eines mit beweglichen Seitenwandungen ausgestatteten Nutzfahrzeuges;
Figur 2 eine Teilschnittdarstellung des oberen Längsgurtes eines Fahrzeugaufbaues bei in der Festgestellten Lage befindlicher Seitenwandung;
Figur 3 eine Teilschnittdarstellung des oberen Längsgurtes eines Fahrzeugaufbaues bei in der festgestellten Lage befindlicher Seitenwandung.

Der in der Zeichnung schematisch dargestellte Fahrzeugaufbau besteht in der Hauptsache aus einem aus die Laderaumlänge überspannenden, über aufragende Stützen 1 und Rungen 2 gegen das Fahrzeugchassis 3 abgestützten oberen Längsgurten 4 gebildeten Verdeckgestell, bei dem eine den Dachbereich des Verdeckes übergreifende Plane 5 von die Ladeflächenbreite überspannenden und an den oberen Längsgurten 4 des Verdeckgestelles abgestützten Spriegeln 6. An den oberen Längsgurten 4 des Verdeckgestelles sind ferner die Seitenwandungen des Fahrzeugaufbaues bildende Seitenwandplanen 7 in Fahrzeuglängsrichtung verschieblich aufgehängt.
Im oberen Längsgurt 4 ist eine zu dessen Profilaußenseite hin geöffnete Profilkammer 8 ausgebildet, deren maximale vertikale Profilhöhe dem Durchmesser der Rolle 9 entspricht. Die hinsichtlich ihres Querschnittsprofiles im Wesentlichen dreieckförmige Profilkammer 8 weist an ihrer Unterseite eine Rollenlaufbahn 10 auf und ist an ihrer Oberseite durch eine im Wesentlichen horizontal ausgerichtete Wandung 11 begrenzt. Die innenliegende Wandung der Profilkammer 8 setzt sich aus einem oberen, im Wesentlichen vertikal ausgerichteten 12 und einem unteren unter einem steilen Winkel zur Rollenlaufbahn 10 hin abfallenden Wandungsbereich 13 zusammen. Im Bereich der Profilecken ihres Querschnittsprofiles weist die Profilkammer radienförmig abgerundete Wandungsübergänge 14 auf. Die in die Längsgurtaußenseite mündende Öffnung 15 der Profilkammer 8 übergreift den größten Teil der vertikalen Profilhöhe der Profilkammer 8 und ist zur Längsgurtaußenseite hin durch einen oberen 16 und einen unteren 17, in der Ebene der vertikalen Profillängswandung des Längsgurtes 4 angeordneten Wandungssteg begrenzt.
Die in der Profilkammer 8 aufgenommene Rolle 9 weist eine kreisbogenförmig gekrümmte Lauffläche 18 auf, wobei die Rollenlaufbahn 10 der Profilkammer 8 einen zur kreisbogenförmigen Krümmung Rollenlauffläche 10 komplementären Krümmungsradius besitzt.
Der Anbindung einer Seitenwandplane 7 an die in der Profilkammer 8 aufgenommene Rolle 9 besteht aus einem L-förmigen Tragteil 19, welches mit seinem kürzeren Profilschenkel 20 in die Profilkammer 8 der oberen Längsgurte 4 eingreift und an dessen längeren Profilschenkel 21 mittels durchgehender Befestigungsmittel 22 eine Seitenwandplane 7 befestigt ist. An dem in die Profilkammer 8 eingreifenden kürzeren Profilschenkel 20 des Tragteiles 19 ist die Rolle 9 fliegend gelagert.

## Patentansprüche

1. Fahrzeugaufbau mit flexiblen, insbesondere durch eine Plane (7) gebildeten, und vermittels Rollen (9) an oberen Längsgurten (4) des Fahrzeugaufbaues in Fahrzeuglängsrichtung verschieblich aufgehängten Seitenwandungen (7), wobei die oberen Längsgurte (4) des Fahrzeugaufbaues mit einer in Längsrichtung durchgehenden wenigstens schlitzförmig geöffneten Rollenlaufbahn (10) versehen und die flexiblen Seitenwandungen (7) an eine Profilwandung (16, 17) der oberen Längsgurte (4) durchgreifenden, an die Lagerachsen der Rollen (9) angeschlossenen Tragteilen (19) aufgehängt sind, und wobei die Rollenlaufbahn (10) in einer über deren Länge hin durchlaufenden, zu deren Außenseite hin wenigstens schlitzförmig offenen Profilkammer (8) der oberen Längsgurte (4) angeordnet ist, deren Querschnittsform eine Ausrichtung der Lagerachsen der Rollen (9) gegen die Vertikale erlaubt,
dadurch gekennzeichnet,
daß die größte vertikale Profilhöhe der Profilkammer (8) geringfügig kleiner als der Rollendurchmesser ist.

2. Fahrzeugaufbau nach Anspruch 1, dadurch gekennzeichnet, daß die Rollen (9) kreisbogenförmig gekrümmte Laufflächen und die die Rollen in vertikaler Richtung abstützende Rollenlaufbahn (10) in der Profilkammer (8) der oberen Längsgurte (4) des Fahrzeugaufbaues eine komplementär kreisbogenförmig gekrümmte Profilquerschnittsform aufweist.

3. Fahrzeugaufbau nach Anspruch 1 oder 2, dadurch gekennzeichnet, daß die die Rollenlaufbahn (10) beinhaltende Profilkammer (8) der oberen Längsgurte (4) im wesentlichen eine einem auf der Spitze stehenden ungleichschenkeligen Dreieck entsprechende Querschnittsform aufweist.

4. Fahrzeugaufbau nach einem der Ansprüche 1 bis 3, dadurch gekennzeichnet, daß die Rollen (9) fliegend in L-förmigen, mit ihrem kürzeren Profilschenkel (20) in die Profilkammer (8) der oberen Längsgurte (4) eingreifenden Tragteilen (19) gelagert und die verschieblichen Seitenwandungen (7) mit dem längeren Profilschenkel (21) der Tragteile verbunden sind, wobei der in die Profilkammer (8) der Längsgurte (4) eingreifende Profilschenkel (20) der Tragteile eine Lagerung für die Rollen (9) beinhaltet.

5. Fahrzeugaufbau nach einem der Ansprüche 1 bis 4, dadurch gekennzeichnet, daß eine Öffnung (15) der Profilkammer (8) zur Längsgurtaußenseite hin durch je einen oberen (16) und einen unteren (17), in der Ebene der Profillängswandung des Längsgurtes (4) angeordneten Wandungssteg begrenzt ist.

6. Fahrzeugaufbau nach einem der Ansprüche 1 bis 5, dadurch gekennzeichnet, daß zumindest die Laufflächen der Rollen (9) aus einem Kunststoffmaterial bestehen.

## Claims

1. Vehicle body with flexible side walls (7), formed in particular by a tarpaulin (7) and displaceably suspended on upper longitudinal belts (4) of the vehicle body in the longitudinal direction of the vehicle by means of rollers (9), wherein the upper longitudinal belts (4) of the vehicle body are provided with a roller track (10) which is continuous in the longitudinal direction and is opened at least in a slotted manner and the flexible side walls (7) are suspended on support parts (19) penetrating a profile wall (16, 17) of the upper longitudinal belts (4) and are attached to the mounting axes of the rollers (9) and wherein the roller track (10) is arranged in a profile chamber (8) of the upper longitudinal belts (4) which is continuous over the length thereof and is open at least in a slotted manner towards the exterior thereof, the cross-sectional shape of which allows an alignment of the mounting axes of the rollers (9) relative to the perpendicular, characterised in that the greatest vertical profile height of the profile chamber 8 is slightly smaller than the diameter of the rollers.

2. Vehicle body according to claim 1, characterised in that the rollers (9) have tracks bent in the shape of a circular arc and the roller track (10) supporting the rollers in the vertical direction in the profile chamber (8) of the upper longitudinal belts (4) of the vehicle body has a complementary profile cross-sectional shape bent in the shape of a circular arc.

3. Vehicle body according to claim 1 or 2, characterised in that the profile chamber (8) of the upper longitudinal belts (4) containing the roller track (10) substantially has a cross-sectional shape corresponding to an inverted unequal triangle.

4. Vehicle body according to any one of claims 1 to 3, characterised in that the rollers (9) are mounted overhung in L-shaped support parts (19) engaging with their shorter profile leg (20) in the profile chamber (8) of the upper longitudinal belts (4) and the displaceable side walls (7) are connected to the longer profile leg (21) of the support parts, wherein the profile leg (20) of the support parts engaging in the profile chamber (8) of the longitudinal belts (4) contains a bearing for the rollers (9).

5. Vehicle body according to any one of claims 1 to 4, characterised in that an opening (15) of the profile chamber (8) towards the exterior of the longitudinal belt is limited by a respective upper (16) and lower (17) wall web arranged in the plane of the profile longitudinal wall of the longitudinal belt (4).

6. Vehicle body according to any one of claims 1 to 5, characterised in that at least the tracks of the rollers (9) consist of a plastics material.

## Revendications

1. Structure de véhicule comportant des parois latérales **(7)** flexibles, en particulier formées par une bâche **(7)** et accrochées, au moyen de rouleaux **(9)**, de façon mobile dans la direction longitudinale du véhicule, sur des membrures longitudinales supérieures **(4)** de la structure de véhicule, les membrures longitudinales supérieures **(4)** de la structure de véhicule étant munies d'une piste de roulement pour rouleaux **(10),** qui est au moins ouverte en forme de fente continue dans la direction longitudinale, et les parois latérales **(7)** flexibles étant accrochées à des parties supports **(19)** raccordées aux axes de tourillonnement des rouleaux **(9)**, traversant une paroi profilée **(16, 17)** des membrures longitudinales supérieures **(4),** et la piste de roulement à rouleaux **(10)** étant disposée dans une chambre profilée **(8),** au moins ouverte en forme de fente en direction de sa face extérieure, continue sur la longueur, chambre appartenant aux membrures longitudinales supérieures **(4)**, dont la forme de section transversale permet d'orienter les axes de tourillonnement des rouleaux **(9)** par rapport à la verticale, caractérisée en ce que
la hauteur maximale verticale du profil de la chambre profilée **(8)** est légèrement inférieure au diamètre des rouleaux.

2. Structure de véhicule selon la revendication 1, caractérisée en ce que les rouleaux **(9)** présentent des faces de roulement incurvées en forme d'arc de cercle et la piste de roulement à rouleaux **(10),** soutenant les rouleaux en direction verticale, présente, dans la chambre profilée **(8)** des membrures longitudinales supérieures **(4)** de la structure de véhicule, une forme de section transversale de profil incurvé en forme d'arc de cercle, complémentaire.

3. Structure de véhicule selon la revendication 1 ou 2, caractérisée en ce que la chambre profilée **(8)** des membrures longitudinales supérieures **(4),** contenant la piste de roulement à rouleaux **(10),** présente, essentiellement, une forme de section transversale, correspondant à un triangle scalène placé sur la pointe.

4. Structure de véhicule selon l'une des revendications 1 à 3, caractérisée en ce que les rouleaux **(9)** sont montés en porte-à-faux dans des parties supports **(19)** en forme de L, s'engageant, par leur branche de profilé courte **(20)**, dans la chambre profilée **(8)** des membrures longitudinales supérieures **(4)**, et les parois latérales **(7)** mobiles sont reliées aux branches de profilé longues **(21)** des parties supports, la branche de profilé **(20)** des parties supports, s'engageant dans la chambre profilée **(8)** des membrures longitudinales **(4),** contenant un palier de tourillonnement pour les rouleaux **(9)**.

5. Structure de véhicule selon l'une des revendications 1 à 4, caractérisée en ce qu'une ouverture **(15)** de la chambre profilée **(8)** est limitée, par rapport à la face extérieure de la membrure longitudinale, par une nervure de paroi, respectivement supérieure **(16)** et inférieure **(17)**, disposée dans le plan de la paroi longitudinale de profilé de la membrure longitudinale **(4)**.

6. Structure de véhicule selon l'une des revendications 1 à 5, caractérisée en ce qu'au moins les faces de roulement des rouleaux **(9)** sont constituées d'un matériau synthétique.
